Europäisches Patentamt

(19) **European Patent Office**

Office européen des brevets

(11) Veröffentlichungsnummer: **0 006 132 B2**

(12) # NEUE EUROPÄISCHE PATENTSCHRIFT

(45) Veröffentlichungstag der neuen Patentschrift:
26.08.87

(51) Int. Cl.⁴: **H 04 Q 11/04, H 04 Q 3/54**

(21) Anmeldenummer: **79101480.6**

(22) Anmeldetag: **15.05.79**

(54) **Indirekt gesteuerte Vermittlungsanlage mit über Zeitkanalkoppler geführten Zeitkanalverbindungswegen, insbesondere Fernsprechvermittlungsanlage.**

(30) Priorität: **14.06.78 DE 2826113**

(43) Veröffentlichungstag der Anmeldung:
**09.01.80 Patentblatt 80/1**

(45) Bekanntmachung des Hinweises auf die Patenterteilung:
**12.05.82 Patentblatt 82/19**

(45) Bekanntmachung des Hinweises auf die Entscheidung über den Einspruch:
**26.08.87 Patentblatt 87/35**

(84) Benannte Vertragsstaaten:
**CH FR GB IT NL**

(56) Entgegenhaltungen:
DE - A - 2 526 115
FR - A - 2 353 193
US - A - 3 912 873
US - A - 3 974 343

1978 INTERNATIONAL CONFERENCE ON COMMUNICATIONS, Band 3, 4-7 Juni 1978, Toronto, CA, ARRIGONI et al.: "Proteo: an example of system flexibility for introduction in a telecom network" Seiten 37.1.1 bis 37.1.5
1978 INTERNATIONAL CONFERENCE ON COMMUNICATIONS, Band 2, 4-7 Juni 1978, Toronto, CA, CESARATTO et al.: "DMS-200 control structure", Seiten 32.2.1 bis 32.2.5
NTC '77 CONFERENCE RECORD, Band 3, Dezember 1977, New York, US, SVALA: "DSS-1, a digital local switching system with remote line switches", Seiten 39:5-1 bis 39:5-7
PROCEEDINGS NATIONAL ELECTRONIC CONFERENCE, Band 31, 1977, New York, US, SCOTT: "Local digital switching control concepts", Seiten 39, 40, 42

(73) Patentinhaber: **Siemens Aktiengesellschaft Berlin und München, Wittelsbacherplatz 2, D-8000 München 2 (DE)**

(72) Erfinder: **Müller, Helmut, Dipl.-Ing., Meisenweg 3, D-8033 Planegg (DE)**
Erfinder: **Von Ow, Hans Peter, Dr., Dipl.-Ing., Starnbergerstrasse 11, D-8000 München 71 (DE)**
Erfinder: **Paulmichl, Erich, Dipl.-Ing., Am Würmufer 9, D-8035 Gauting (DE)**
Erfinder: **Rambold, Thomas, Dipl.-Ing., Guardinistrasse 139, D-8000 München 70 (DE)**
Erfinder: **Werres, Bernhard, Dipl.-Ing., Benediktenwand 23, D-8000 München 90 (DE)**

(56) Entgegenhaltungen: (Fortsetzung)
**COMMUTATION & ELECTRONIQUE, Heft 58, Juli 1977, Paris, FR, ALEXANIAN et al.: "Liaison entre centres E10 et centre de traitement des informations de type B", Seiten 21-32**
**BULLETIN SEV/VSE, Band 67, Heft 18, September 1976, Zürich, CH, WAAS: "Periphere Prozessoren im Integrierten Fernmeldesystem IFS-1" Seiten 969-973**
**1972 INTERNATIONAL ZURICH SEMINAR ON INTEGRATED SYSTEMS FOR SPEECH, VIDEO AND DATA COMMUNICATIONS, März 1972, Zürich, CH, FONTOLLIET: "Transmission of control information", Seiten B5(1) bis B5(4)**
**1978 INTERNATIONAL ZURICH SEMINAR ON DIGITAL COMMUNICATIONS, März 1978, Zürich, CH, HORIKI et al.: "Design philosophies on local digital switching systems" Seiten B2.1 bis B2.5**
**TELCOM REPORT, Band 2, Heft 3, März 1979, München, DE, SUCKFULL: "Architektur einer neuen Linie digitaler öffentlicher Fernsprechvermittlungen", Seiten 174 bis 183**
**N.J. Skaperda, Generic Digital Switching System, ISS Band 1, Kyoto, Japan, 1976, S. 223-4-1 bis 223-4-8**

EP 0 006 132 B2

## Beschreibung

Die Erfindung bezieht sich auf den Aufbau und die Arbeitsweise von indirekt gesteuerten Vermittlungsanlagen, die Zeitkanalverbindungswege haben, die über Zeitkanalkoppler geführt sind. Solche Vermittlungsanlagen sind insbesondere für Fernsprechzwecke vorgesehen. Es ist bereits bekannt, solche Vermittlungsanlagen in verschiedene Teile zu gliedern und dabei mehrere dezentrale Steuerwerke für Teilnehmeranschlussschaltungsgruppen vorzusehen, die mit mindestens einem zentralen Steuerwerk zusammenarbeiten. Alle diese Steuerwerke wirken dann bei der Abwicklung von Vermittlungsvorgängen mit. Über die erwähnten Zeitkanäle werden die für Gesprächsverbindungen erforderlichen Sprachsignale übertragen, die auch in Form von PCM-Signalen auftreten können (siehe z.B. 1978 International Zurich Seminar on Digital Communications, Proceedings, IEEE Catalogue Nr. 78CH11 325-O ASST, Seiten B 2.1 bis B 2.5; DE-AS 2 211 400, 2 225 702; DE-PS 2 454 144).

Die Erfindung betrifft eine indirekt gesteuerte Vermittlungsanlage mit über Zeitkanalkoppler geführten Zeitkanalverbindungswegen, insbesondere Fernsprechvermittlungsanlage, bei der bei der Abwicklung von der Herstellung von Nachrichtenverbindungen dienenden Vermittlungsvorgängen dezentrale Zeitkanalkoppler und ihnen zugeordnete dezentrale Steuerwerke und mindestens ein zentrales Koppelfeld und mindestens ein ihm zugeordnetes zentrales Steuerwerk mitwirken, und bei der zwischen dem zentralen Koppelfeld und jedem der dezentralen Zeitkanalkoppler ein Übertragungssystem, z.B. PCM-System, mit Kanälen vorgesehen ist, von denen einer zur Bereitstellung eines Steuerweges als Signalkanal für den Steuerzeichenaustausch, der zur Herstellung und während der Aufrechterhaltung dieser Verbindungen abgewickelt wird, und zur Steuerung jedes der dezentralen Steuerwerke durch das zentrale Steuerwerk verwendet wird, sowie weiterführend über das zentrale Koppelfeld zu dem zentralen Steuerwerk durchgeschaltet ist, und von denen die übrigen zur Herstellung von der Nachrichtenübertragung dienenden wählbaren Verbindungen dienen.

Teilweise ist eine derartige Schaltungsanordnung bereits durch das Konferenzpapier vom International Switching Symposium 1976 in Kyoto/Japan (N.J. Skaperda «Generic Digital Switching System», ISS Band 1, Kyoto/Japan, Seiten 223-4-1 bis 223-4-8), sowie durch das NTC '77 Conference Record, Vol. 3, Seiten 39:5.1 bis 39:5.7 bekannt. In einer durch diese Literaturstellen bekannten Schaltungsanordnung stehen die dezentralen Steuerwerke mit dem zentralen Steuerwerk über ein den dezentralen Steuerwerken gemeinsames Signal-Busleitungssystem in Verbindung, das also als ein allen dezentralen Steuerwerken gemeinsamer Signalkanal für den oben genannten Steuerzeichenaustausch dient. Die betreffenden Steuerzeichen werden vom jeweils betreffenden dezentralen Steuerwerk über den gemeinsamen Signalkanal aufgenommen und dann zur Steuerung einer dem dezentralen Steuerwerk entsprechenden dezentralen Zeitkanal-Koppeleinrichtung sowie weiterer zugeordneter dezentraler Einrichtungen weitergeleitet. Entsprechendes gilt umgekehrt für Steuerzeichen, die vom dezentralen Steuerwerk zunächst aufgenommen werden und dann über das gemeinsame Signal-Busleitungssystem zum zentralen Steuerwerk hin weitergegeben werden. Im Gegensatz dazu geht die Erfindung davon aus, dass zwischen dem zentralen Koppelfeld und jedem der dezentralen Zeitkanal-Koppler ein Übertragungssystem mit Kanälen vorgesehen ist, von denen einer zur Bereitstellung eines Steuerweges als Signalkanal für den Steuerzeichenaustausch, der zur Herstellung und während der Aufrechterhaltung dieser Verbindungen abgewickelt wird, und zur Steuerung jedes der dezentralen Steuerwerke durch das zentrale Steuerwerk verwendet wird, sowie weiterführend über das zentrale Koppelfeld zu dem zentralen Steuerwerk durchgeschaltet ist; bei diesen Kanälen handelt es sich also um solche, die im übrigen zur Herstellung von der Nachrichtenübertragung dienenden wählbaren Verbindungen dienen.

Die Erfindung geht von der Aufgabe aus, mittels technischer Mittel die Zusammenarbeit der verschiedenen Steuerwerke in zweckmässiger Weise zu ermöglichen. Hierbei ist der Aspekt der Erweiterbarkeit einer vorgegebenen Anlage im Hinblick auf die zwischen den Steuerwerken erforderlichen Steuerwege von besonderer Bedeutung.

Die Erfindung löst die gestellte Aufgabe dadurch, dass der jeweils pro dezentrales Steuerwerk vorgesehene und ebenfalls über einen Kanal des dem jeweiligen dezentralen Steuerwerk zugeordneten Übertragungssystems geführte Steuerweg ebenso wie wählbare Verbindungen wahlweise über einen beliebigen der Kanäle des Übertragungssystems sowie über die der Herstellung von Nachrichtenverbindungen dienenden dezentralen Zeitkanalkoppler durchschaltbar ist. Gemäss der Erfindung wird also für jedes dezentrale Steuerwerk ein eigener Signalkanal für den Steuerzeichenaustausch mit dem zentralen Steuerwerk bereitgestellt. Die Vielzahl der dezentralen Steuerwerke ist also nicht auf ein ihnen gemeinsames Signal-Busleitungssystem angewiesen, wie im oben erwähnten bekannten Falle. Vielmehr verfügt jedes dezentrale Steuerwerk über seinen eigenen, dem Steuerzeichenaustausch mit dem zentralen Steuerwerk dienenden Signalkanal. Für die Bereitstellung dieser relativ grossen Anzahl von Signalkanälen für den Steuerzeichenaustausch mit dem zentralen Steuerwerk werden einige von denjenigen Verbindungswegen in den dezentralen Zeitkanalkopplern verwendet, die in dem zentralen Koppelfeld und in den verschiedenen, sie miteinander verbindenden Bündeln von Kanälen im übrigen für die Herstellung individuell gewählter Verbindungen bereitgestellt sind. Wegen dieser Verwendung von an sich frei verfügbaren Verbindungswegen für die Bereitstellung der Datenwege in einer derartigen Vermittlungsanlage ist durch die erwähnten Steuerwege sichergestellt, dass die verschiedenen Steuerwerke beim Abwickeln von Vermittlungsvorgängen jederzeit zusammenarbeiten können. Bei Erweiterung einer vorgegebenen Anlage können weitere entsprechende Steuerwege durch zusätzliche Durchschaltemassnahmen geschaffen werden, ohne dass dabei besondere Verbindungsleitungen gelegt werden müssen. Solche besonderen Verbindungsleitungen für Steuerwege erübrigen sich vorteilhafterweise von vornherein. Das erwähnte Koppelfeld, das die dezentralen Zeitkanalkoppler verbindet, kann auch aus mehreren Zeitkanalkopplern aufgebaut sein. Ist die Anzahl der dezentralen Zeitkanalkoppler sehr gross, so kann das Koppelfeld auch in mehrere Koppelstufen gegliedert sein, beispielsweise in zwei Zeitkanalkoppelstufen, zwischen denen sich eine oder mehrere Raumkanalkoppelstufen befinden.

Es ist zwar bereits bekannt (siehe «Technische Mitteilungen PTT 12/1973», Seiten 554 bis 578), durch PCM-Multiplextechnik gebildete Datenkanäle als Steuerkanäle auszunutzen (siehe a.a.O. Seite 565) und darüber hinaus besondere PCM-Multiplexleitungen für die Übertragung von Wahlsignalen zu benutzen (siehe a.a.O. Seiten 571 bis 572). In diesem Zusammenhang ist auch angegeben, Registersignale zwischen Leitungssätzen und Registern über einen Sprachkanal auszutauschen, während Signale zwischen einer Wahleinheit und dem zentralen Steuerwerk dagegen über besondere Leitungen ausgetauscht werden. Im Unterschied dazu sind gemäss der Erfindung die Zeitkanalkoppler, welche zur Herstellung von Zeitkanalverbindungswegen für Gespräche vorgesehen sind, auch für Steuerwege ausgenutzt, über die Steuerzeichen zwischen Steuerwerken übertragen werden. Diese Steuerzeichen geben Steuermeldungen oder Steuerbefehle an, die von den Steuerwerken auszunutzen oder auszuführen sind.

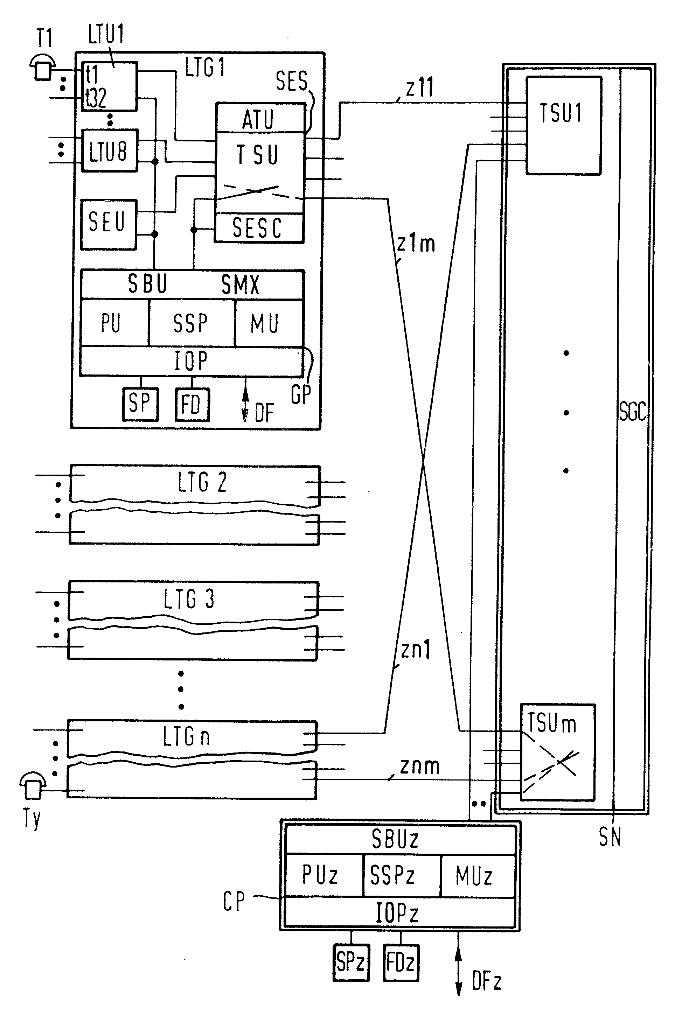

Beispiele für die Anwendung der erfindungsgemässen Technik bei einer Vermittlungsanlage und für die Arbeitsweise der zugehörigen Teileinrichtungen werden im folgenden anhand der Figur näher erläutert. Die Einzelheiten der Anlage sind hier nur so weit gezeigt, wie sie für die Erfindung von Bedeutung sind, die sich in erster Linie auf die Zusammenschaltung von Steuerwerken über Steuerwege auswirken.

In der Figur ist zunächst ein Anlagenteil LTG1 gezeigt, der einen Zeitkanalkoppler TSU hat, der mit einer Kopplersteuerung SESC und mit einer Dämpfungsschaltung ATU ausgerüstet ist. Die Kopplersteuerung SESC bekommt Einstellbefehle von einem dezentralen Steuerwerk GP. Die Dämpfungsschaltung ATU kann Dämpfungsunterschiede bei den über Teilnehmeranschlussschaltungen an den Zeitkanalkoppler TSU angeschlossenen Teilnehmerleitungen ausgleichen, die zu den Teilnehmerstellen, wie zu der Teilnehmerstelle T1, führen. Zur Teilnehmerstelle T1 gehört die Teilnehmeranschlussschaltung t1. Die Teilnehmeranschlussschaltungen sind hier zu Mehrfachanschlussschaltungen gruppenweise zusammengefasst. So sind die Teilnehmeranschlussschaltungen t1...t32 zur Mehrfachanschlussschaltung LTU1 zusammengefasst. Es sind bei dem Anlagenteil LTG1 mehrere Mehrfachanschlussschaltungen vorgesehen, zu denen auch noch die Mehrfachanschlussschaltung LTU8 gehört. Es können auch entsprechende Mehrfachanschlussschaltungen vorgesehen sein, bei denen mehrere Verbindungsleitungsanschlussschaltungen zusammengefasst sind, an die Verbindungsleitungen angeschlossen sind, die beispielsweise zu anderen Vermittlungsanlagen führen. An den Zeitkanalkoppler TSU ist ferner eine Signalschaltung SEU angeschlossen, in der Tongenerator, Rufgenerator, Codesender- und -empfänger zusammengefasst sind. Diese Signalschaltung kann demgemäss die verschiedenen Hörtöne sowie Rufzeichen und sonstige benötigten Codezeichen liefern. Ausserdem kann sie solche Zeichen auch für ihre Auswertung empfangen. Die Teilnehmeranschlussschaltungen t1...t32 und die weiteren sowie die Signalschaltung SEU sind an das Steuerwerk GP und an den Zeitkanalkoppler TSU angeschlossen. Diese Einrichtungen können daher über den Zeitkanalkoppler TSU fallweise miteinander verbunden werden. Ausserdem kann zwischen diesen Einrichtungen auch ein Zeichenaustausch stattfinden, und zwar über einen zum dezentralen Steuerwerk GP gehörenden Zeichenpuffer SBU, mit dessen Hilfe vermieden wird, dass dabei ein störender Zeitzwang auftritt. Zu diesem Steuerwerk gehört noch ein Leitwerk SSP, ein Verarbeitungswerk PU, ein Speicher MU und eine Ein-Ausgabesteuerung IOP, an die noch ein Hintergrundspeicher FD und ein Bedienungsgerät SP angeschlossen sind. Ferner ist dort noch ein Datenfernübertragungsanschluss DF vorgesehen, über den gegebenenfalls mit anderen Vermittlungen Zeichen ausgetauscht werden können.

Bei der in der Figur gezeigten Anlage sind mehrere der beschriebenen Anlagenteile vorgesehen, zu denen noch Anlagenteile LTG2...LTGn gehören. Die Zeitkanalkoppler TSU dieser Anlagenteile sind mit einem Koppelfeld SN verbunden, das hier aus den Zeitkanalkopplern TSU1...TSUm besteht. Dort ist noch ein zentrales Steuerwerk CP angeschlossen, das entsprechend wie die übrigen Steuerwerke aufgebaut ist. Dieses zentrale Steuerwerk wirkt beim Aufbau und Abbau von Verbindungswegen mit, die über mindestens zwei der Anlagenteile LTG1, LTG2, LTG3...LTGn führen. Dabei veranlasst das zentrale Steuerwerk CP auch, dass die anderen Steuerwerke für den Aufbau und Abbau von Verbindungswegen sinngemäss in Anspruch genommen werden. Zum zentralen Steuerwerk CP gehören der Zeichenpuffer SBUz, das Leitwerk SSPz, das Verarbeitungswerk PUz, der Speicher MUz und die Ein-Ausgabesteuerung IOPz, an die der Hintergrundspeicher FDZ und das Bedienungsgerät SPz angeschlossen sind. Ausserdem ist dort noch der Datenfernübertragungsanschluss DFz vorgesehen. Mit Hilfe der zu den verschiedenen Anlagenteile gehörenden Einrichtungen des Koppelfeldes SN und des zentralen Steuerwerks CP können beliebige Verbindungen zwischen den Teilnehmerstellen T1...Ty hergestellt werden, die über Zwischenleitungen führen, welche die Zeitkanalkoppler TSU der Anlagenteile und die Zeitkanalkoppler des Koppelfeldes SN verbinden. Über solche Zwischenleitungen sind auch die Steuerwege zwischen den verschiedenen Steuerwerken geführt. Von diesen Zwischenleitungen sind in der Figur nur einige gezeigt, nämlich die Zwischenleitungen z11, z1m, zn1 und znm.

Der ständig im durchgeschalteten Zustand bereitgehaltene Steuerweg, über den Steuerzeichen zwischen dem dezentralen Steuerwerk GP und dem zentralen Steuerwerk CP übertragen werden können, führt hier beispielsweise über die Zwischenleitung z1m. Zu diesem Steuerweg gehören ausserdem die Verbindung vom Zeichenpuffer SBU zum Zeitkanalkoppler TSU und die Verbindung vom Zeichenpuffer SBUz zum Zeitkanalkoppler TSUm. In den Zeitkanalkopplern TSU und TSUm ist die Durchschaltung mit Hilfe der Kopplersteuerungen SESC und SGC zustandegebracht. In der Figur ist noch das Vorhandensein eines weiteren Steuerweges angedeutet, der vom dezentralen Steuerwerk des Anlagenteils LTGn zum zentralen Steuerwerk CP führt. Für diesen Steuerweg wird die Zwischenleitung znm und der Zeitkanalkoppler TSUm benutzt sowie die von dort zum Zeichenpuffer SBUz führende Verbindung.

Die Übertragungswege sind hier in den dezentralen Steuerwerken, wie dem Steuerwerk GP, über Zeichenmultiplexer (siehe Löbel, Müller, Schmid: «Lexikon der Datenverarbeitung», 1969, Seite 349) geführt. An einen derartigen Zeichenmultiplexer sind dann noch andere Übertragungswege angeschlossen. So sind beim Zeichenmultiplexer SMX des Steuerwerks GP noch Übertragungswege angeschlossen, die zur zugehörigen Kopplersteuerung SESC, zu den Teilnehmeranschlussschaltungen t1...t32 und den übrigen und zu der Signalschaltung SEU führen. Der Zeichenmultiplexer setzt die Zeichenübertragung zwischen verschiedenen Anzahlen von Zeichenkanälen um. Er kann dabei auch mitwirken, die Zeichenübertragung von langsamen Zeichenkanälen auf schnelle Zeichenkanäle und umgekehrt umzusetzen.

Da bei der Vermittlungsanlage Zeitkanalverbindungswege vorgesehen sind, sind auch die Zwischenleitungen z11...znm, die Schalter der Zeitkanalkoppler und die von dort zu den Steuerwerken führenden Leitungen zeitmultiplexweise ausgenutzt. Dementsprechend steht ein Steuerzeichen jeweils in zyklischer Wiederholung entsprechend dem Übertragungsraster dieser zeitmultiplexweise ausgenützten Übertragungswege auf den Übertragungswegen für Steuerzeichen an. Jedoch wird ein einem Steuerwerk zur Übertragung anstehendes Steuerzeichen erst dann übertragen, wenn ein die Übertragung und den Empfang des vorhergehenden Steuerzeichens meldendes Quittungszeichen eingetroffen ist. Ein derartiges Quittungszeichen wird von dem Steuerwerk geliefert, das das betreffende Steuerzeichen empfangen hat. Zweckmässigerweise werden Steuerzeichen geliefert, die aus mehreren Bytes bestehen. Dazu gehören dann Bytes für die Synchronisierung, ferner Bytes für die Quittungsnummer und für die Zeichennummer. Ausserdem gehört dazu ein Byte, das die Länge des Steuerzeichens angibt, ferner ein Prüfbyte und mehrere die Steuerinformation selber angebende Nutzbytes.

Zweckmässigerweise wickeln die dezentralen Steuerwerke, wie das Steuerwerk GP, in jedem Fall solche Vermittlungsfunktionen ab, die für jede Verbindungsanforderung anfallen, und die unter Zeitzwang stehen. Dazu gehören das Abfragen von Teilnehmerschaltungen, die Verarbeitung von Vermittlungssignalen, die insbesondere von Teilnehmerschaltungen oder über Verbindungsleitungen geliefert werden, die Gebührenerfassung, wobei z.B. Gebührenimpulse gezählt werden, und die Lieferung von Einstellbefehlen für die zugehörige Kopplersteuerung. Das zentrale Steuerwerk CP wickelt dagegen Vermittlungsfunktionen ab, die den Zusammenhang der Teileinrichtungen der Anlage und deren Zusammenhang mit anderen Anlagen berücksichtigen müssen. Dazu gehören die Bewertung von gewählten Ziffern von Rufnummern, die Suche von zu benutzenden Koppelfeldausgängen, die Suche und Auswahl von Verbindungswegen und die Leitweglenkung.

Es empfiehlt sich, das zentrale Steuerwerk CP und gegebenenfalls auch das zentrale Koppelfeld SN jeweils doppelt vorzusehen. In der Figur ist dies dadurch angedeutet, dass diese Einrichtungen doppelt umrahmt sind. Dadurch wird ein Ausfall der gesamten Anlage vermieden, wenn eine der doppelt vorgesehenen Einrichtungen ausfällt. Ein Ausfall der nicht doppelt vorgesehenen Einrichtungen beeinträchtigt nicht die Arbeitsweise der übrigen Teile der Anlage und kann daher in der Regel in Kauf genommen werden.

**Patentansprüche**

1. Indirekt gesteuerte Vermittlungsanlage mit über Zeitkanalkoppler (TSU, TSU1...TSUm) geführten Zeitkanalverbindungswegen, insbesondere Fernsprechvermittlungsanlage, bei der bei der Abwicklung von der Herstellung von Nachrichtenverbindungen dienenden Vermittlungsvorgängen dezentrale Zeitkanalkoppler (TSU...) und ihnen zugeordnete dezentrale Steuerwerke (GP) und mindestens ein zentrales Koppelfeld (SN) und mindestens ein ihm zugeordnetes zentrales Steuerwerk (CP) mitwirken, und bei der zwischen dem zentralen Koppelfeld (SN) und jedem der dezentralen Zeitkanalkoppler (TSU...) ein Übertragungssystem, z.B. PCM-System, mit Kanälen vorgesehen ist, von denen einer zur Bereitstellung eines Steuerweges als Signalkanal für den Steuerzeichenaustausch, der zur Herstellung und während der Aufrechterhaltung dieser Verbindungen abgewickelt wird, und zur Steuerung jedes der dezentralen Steuerwerke (GP) durch das zentrale Steuerwerk (CP) verwendet wird, sowie weiterführend über das zentrale Koppelfeld zu dem zentralen Steuerwerk durchgeschaltet ist, und von denen die übrigen zur Herstellung von der Nachrichtenübertragung dienenden wählbaren Verbindungen dienen, dadurch gekennzeichnet, dass der jeweils pro dezentrales Steuerwerk (GP) vorgesehene und ebenfalls über einen Kanal des dem jeweiligen dezentralen Steuerwerk (GP) zugeordneten Übertragungssystems geführte Steuerweg ebenso wie wählbare Verbindungen wahlweise über einen beliebigen der Kanäle des Übertragungssystems sowie über die der Herstellung von Nachrichtenverbindungen dienenden dezentralen Zeitkanalkoppler (TSU...) durchschaltbar ist und mit Hilfe des zentralen Steuerwerks und des dezentralen Steuerwerks (GP) und mit Hilfe von den Zeitkanalkopplern (TSU, TSU1...TSUm) zugehörigen Kopplersteuerungen (SESC, SGC) ständig im durchgeschalteten Zustand bereitgehalten ist.

2. Vermittlungsanlage nach Anspruch 1, dadurch gekennzeichnet, dass in den Steuerwerken (GP, CP) Zeichenpuffer (SBU, SBUz) vorgesehen sind, über die die Steuerwege geführt sind.

3. Vermittlungsanlage nach Anspruch 2, dadurch gekennzeichnet, dass die Übertragungswege in den dezentralen Steuerwerken (GP) über Zeichenmultiplexer (SMX) geführt sind, an die jeweils noch andere Übertragungswege angeschlossen sind, die zur jeweils zugehörigen Kopplersteuerung (SESC), zu jeweils zugehörigen Teilnehmeranschlussschaltungen (t1...t32,...) und zu einer Hörtöne, Rufzeichen und Codezeichen liefernde zugehörigen Signalschaltung (SEU) führen.

4. Vermittlungsanlage nach Anspruch 2 oder 3, dadurch gekennzeichnet, dass ein in einem Steuerwerk (GP, CP) zur Übertragung anstehendes Steuerzeichen erst dann übertragen wird, wenn ein die Übertragung und den Empfang des vorhergehenden Steuerzeichens meldendes Quittungszeichen eingetroffen ist.

5. Vermittlungsanlage nach einem der vorhergehenden Ansprüche, dadurch gekennzeichnet, dass Steuerzeichen geliefert werden, zu denen Bytes für die Synchronisierung, für die Quittungsnummer, für die Zeichennummer, für die Zeichenlänge, ferner ein Prüfbyte und mehrere die Steuerinformation angebende Nutzbytes gehören.

6. Vermittlungsanlage nach einem der vorhergehenden Ansprüche, dadurch gekennzeichnet, dass Steuerzeichen geliefert werden, die Steuermeldungen oder Steuerbefehle angeben.

7. Vermittlungsanlage nach einem der vorhergehenden Ansprüche, dadurch gekennzeichnet, dass ein Steuerzeichen jeweils in zyklischer Wiederholung entsprechend dem Übertragungsraster der zeitmultiplexweise ausgenutzten Übertragungswege auf dem Übertragungsweg ansteht.

8. Vermittlungsanlage nach einem der vorhergehenden Ansprüche, dadurch gekennzeichnet, dass ein dezentrales Steuerwerk (GP) jeweils Vermittlungsfunktionen abwickelt, die für jede Verbindungsanforderung anfallen und unter Zeitzwang stehen, wie das Abfragen von Teilnehmerschaltungen, die Verarbeitung von Vermittlungssignalen, die Gebührenerfassung, die Lieferung von Einstellbefehlen für die Kopplersteuerung (SESC), und dass ein zentrales Steuerwerk (CP) jeweils Vermittlungsfunktionen abwickelt, die den Zusammenhang der dezentralen Zeitkanalkoppler (TSU) und deren Zusammenhang mit anderen Anlagen berücksichtigen müssen und die dezentralen Steuerwerke (GP) der dezentralen Zeitkanalkoppler (TSU) entlasten, wie die Bewertung von gewählten Ziffern von Rufnummern, die Suche von zu benutzenden Koppelfeldausgängen, die Suche und Auswahl von Verbindungswegen und die Leitweglenkung.

## Claims

1. An indirectly controlled exchange system comprising time channel connection paths which extend via time channel couplers (TSU, TSU1...TSUm), in particular a telephone exchange system, wherein decentral time channel couplers (TSU...) and decentral control units (GP) assigned thereto and at least one central switching network (SN) and at least one central control unit (CP) assigned thereto cooperate in the handling of exchange procedures which serve for the establishment of communications connections and wherein between the central switching network (SN) and each of the decentral time channel couplers (TSU...) a transmission system, e.g. a PCM-system, is provided with channels, one of which is used to make available a control path as signalling channel for the exchange of control signals which takes place for the establishment of, and during the maintenance of these connections, and is used to control each of the decentral control units (GP) by means of the central control unit (CP), and is then switched through via the central switching network to the central control unit, and where the other channels serve to establish dialled connections for the purpose of communications transmission, characterised in that the control path which is provided in respect of every decentral control unit (GP) and likewise extends via one channel of the transmission system assigned to the respective decentral control unit (GP) – in the same manner as the dialled connections – can be switched through selectively via any one of the channels of the transmission system or via the decentral time channel couplers (TSU...) which serve to establish communications connections and by means of the central control unit and the decentral control unit (GP), and coupler control units (SESC, SGC) assigned to the time channel couplers (TSU, TSU1...TSUm) is constantly kept in the switched-through state.

2. Exchange system as claimed in claim 1, characterised in that signal buffers (SBU, SBUz), via which extend the control paths, are provided in the control units (GP, CP).

3. Exchange system as claimed in claim 2, characterised in that the transmission paths in the decentral control units (GP) extend via signal multiplexers (SMX) which are each connected to other transmission paths which lead to the assigned coupler control unit (SESC), to assigned subscriber connection circuits (T1...T32, ...) and to an associated signal circuit (SEU) which supplies audible tones, ringing signals and code signals.

4. Exchange system as claimed in claim 2 or 3, characterised in that a control signal which is awaiting transmission in a control unit (GP, CP) is not transmitted until the arrival of an acknowledgement signal which reports the transmission and reception of the preceding control signal.

5. Exchange system as claimed in one of the preceding claims, characterised in that control signals are supplied which ared assigned bytes for the synchronisation, for the acknowledgement number, for the signal number, for the signal length, and in addition one test byte and a plurality of useful bytes which indicate the control information.

6. Exchange system as claimed in one of the preceding claims, characterised in that control signals are supplied which indicate control messages or control commands.

7. Exchange system as claimed in one of the preceding claims, characterised in that a control signal occurs in cyclic repetition on the transmission path in accordance with the transmission pattern of the transmission paths which are used in t.d.m. fashion.

8. Exchange system as claimed in one of the preceding claims, characterised in that a decentral control unit (GP) in each case handles switching functions which arise in respect of every connection request and which are subject to urgency, such as the interrogation of subscriber circuits, the processing of switching signals, charge metering, the supply of setting-up commands for the coupler control unit (SESC), and that a central control unit (CP) in each case handles switching functions which must take into account the interrelationship between the decentral time channel couplers (TSU) and their relationship with other systems and which reduce the load on the decentral control units (GP) of the decentral time channel couplers (TSU), such as the evaluation of dialled digits of subscriber numbers, the hunting of switching network outputs which can be used, and the hunting and selection of connection paths and routing.

## Revendications

1. Installation de commutation à commande indirecte et à joncteurs à canaux à division temporelle passant par des coupleurs d'étages de commutation temporelle (TSU, TSU1...TSUm), notamment central téléphonique, du type dans laquelle coopèrent, lors du déroulement d'opérations de commutation servant à l'établissement de communications, des coupleurs d'étages de commutation temporelle (TSU...) et des unités de commande décentralisées 6GP), qui leur sont associées, et au moins un champ de couplage central (SN) et au moins une unité de commande centrale (CP), qui lui est associée, et dans laquelle il est prévu entre le champ de couplage central (SN) et chacun des étages de commutation temporelle décentralisés (TSU...), un système de transmission, par exemple un système PCM, comportant des canaux, dont l'un est utilisé pour la préparation d'une voie de commande en tant que canal de signaux pour l'échange de signaux de commande, qui a lieu pour l'établissement et pendant le maintien de ces liaisons, et pour la commande de chacune des unités de commande décentralisées (GP) par l'unité de commande centrale (CP), et est interconnecté ensuite à l'unité de commande centrale par l'intermédiaire du champ de couplage central, les autres canaux étant utilisés pour l'établissement de liaisons pouvant être sélectionnées et servant à la transmission d'informations, caractérisé par le fait que la voie de commande, qui est prévue respectivement pour chaque unité de commande décentralisée (GP) et passe également par l'intermédiaire d'un canal du système de transmission associé à l'unité de commande décentralisée respective (GP), peut être interconnectée, comme les liaisons pouvant être sélectionnées, en passant par l'un quelconque des canaux du système de transmission ainsi que par l'un des coupleurs d'étages de commutation temporelle (TSU...) décentralisés, servant à l'établissement de liaisons de transmission d'informations, et est maintenue en permanence dans l'état interconnecté, à l'aide de l'unité de commande centrale et de l'unité de commande décentralisée (GP) et à l'aide des dispositifs (SESC, SGC) de commande des coupleurs, qui sont associés aux coupleurs d'étages de commutation temporelle (TSU, TSU1...TSUm).

2. Installation de commutation selon la revendication 1, caractérisée par le fait que dans les unités de commande (GP, CP) sont prévues des mémoires tampons de signes (SBU, SBUz) par lesquelles passent les voies ou joncteurs de commande.

3. Installation de commutation selon la revendication 2, caractérisée par le fait que des voies de transmission dans les unités de commande décentralisées (GP) passent par des multiplexeurs de signes (SMX) auxquels sont respectivement reliées également d'autres voies de transmission qui mènent respectivement à des commandes de coupleurs associés (SESC) à des circuits de raccordement d'abonnés associés (t1...t32, ...) et à un circuit associé de signaux (SEU) fournissant des tonalités, des signes d'appel et des signes de code.

4. Installation de commutation selon la revendication 2 ou 3, caractérisée par le fait qu'un signe de commande qui est présent dans une unité de commande (GP, CP) pour la transmission, n'est transmis qu'à l'entrée d'un signe d'accusé de réception qui signale la transmission dès la réception d'un signe de commande antérieur.

5. Installation de commutation selon l'une des revendications antérieures, caractérisée par le fait que des signes de commande sont fournis, auxquels appartiennent des octets pour la synchronisation, pour le numéro d'accusé de réception, pour le numéro de signe, pour la longueur du signe, ainsi que plusieurs octets utiles indiquant l'information de commande.

6. Installation de commutation selon l'une des revendications antérieures, caractérisée par le fait que sont fournis des signes de commande qui indiquent des signalisations de commande ou des instructions de commande.

7. Installation de commutation selon l'une des revendications antérieures, caractérisée par le fait qu'un signe de commande est présent sur la voie de transmission, suivant une répétition cyclique en fonction de la trame de transmission de la voie de transmission utilisée par multiplexage temporel.

8. Installation de commutation selon l'une des revendications antérieures, caractérisée par le fait qu'une unité de commande décentralisée (GP) exécute des opérations de commutation qui se présentent pour chaque demande de communication en urgence, telles que l'interrogation de circuits d'abonnés, le traitement de signaux de commutation, la saisie de taxes, la fourniture d'instructions de réglage pour la commande des coupleurs (SESC), et qu'une unité de commande centrale (CP) exécute des opérations de commutation qui doivent tenir compte de la relation entre les coupleurs de canaux temporels décentralisés (TSU) et leur relation avec d'autres installations, et qui déchargent les unités de commande décentralisées (GP) des coupleurs d'étages de commutation temporels décentralisés (TSU), tels que l'évaluation des chiffres de numéros d'appel sélectionnés, la recherche de sortie du champ de couplage à utiliser, la recherche et la sélection de voies de liaison et la direction d'itinéraires.